# EUROPÄISCHE PATENTSCHRIFT

(11) **EP 1 884 282 B1**
(45) Veröffentlichungstag und Bekanntmachung des Hinweises auf die Patenterteilung: **04.11.2009**
(21) Anmeldenummer: 07014472.0
(22) Anmeldetag: 24.07.2007
(51) Int. Cl.: B01J 19/30, C02F 3/10, C02F 3/12

(54) **Trägerelement für Kläranlage**
Carrier element for a sewage treatment plant
Elément de support pour station d' épuration

(30) Priorität: 03.08.2006 DE 202006011984 U
(43) Veröffentlichungstag der Anmeldung: 06.02.2008
(73) Patentinhaber: KVT Klävertec GmbH, 21762 Otterndorf (DE)
(72) Erfinder: Köster, Wilfried, 21762 Otterndorf (DE)
(74) Vertreter: Hansen, Jochen

(56) Entgegenhaltungen:
- WO-A-96/05144
- DE-A1- 2 020 144
- DE-A1- 3 017 439
- JP-A- 2004 089 826

## Beschreibung

Die Erfindung betrifft ein Trägerelement zur biologischen Reinigung von Abwasser in einem Klärbecken, bei dem eine Vielzahl der Trägerelemente im Klärbecken ohne Zuführung von Sauerstoff oder unter Zuführung von Luft bzw. Sauerstoff in einem ggf. intermittierend verwirbelten Schwebezustand gehalten werden, wobei das Trägerelement in Form einer Halbkugelschale mit einer Rotationssymmetrieachse ausgebildet ist und im davon aufgespannten offenen Hohlkörper innenliegende Lamellen zur Vergrößerung der vor Abrieb geschützten Biofilmaufwuchsfläche vorgesehen sind.

Derartiges Trägermaterial ist aus der DE 30 17 439 A1 bei einem Verfahren zur biologischen Reinigung von Abwasser bekannt. Das Trägermaterial wird in der biologischen Reinigungsstufe der Kläranlage im Schwebezustand und in ständiger Bewegung gehalten, wobei auf dem Trägermaterial bakterieller Bewuchs haftet, der die biologische Reinigung des Abwassers bewirkt. Dabei wird das Trägermaterial in Form von offenen Hohlkörpern dem Abwasserbelebtschlammgemisch eines Belebungsbeckens in bekannter Art in Gegenwart von Sauerstoff zugegeben. Das spezifische Gewicht der Hohlkörper ist in Anpassung an dasjenige des Gemisches und an dessen Strömungskräfte so gewählt, dass die Hohlkörper in der Strömung treiben. Form und Größe der Hohlkörper ist so gewählt, dass in ihrem Inneren die Bakterien eine gegen mechanischen Abrieb geschützte Aufwuchsfläche finden. Dabei ist der Hohlraum des Hohlkörpers durch Lamellen in nischenartige Teilräume unterteilt. Der Hohlkörper weist Kalottenform auf.

Nachteilig an dem bekannten kalottenförmigen Trägermaterial ist, dass der von der Kalotte aufgespannte Hohlraum im wesentlichen nicht durchströmt ist. Entsprechend besteht die Gefahr, dass die von den Lamellen aufgespannten segmentierten Hohlräume vom Biofilm zugesetzt und das Trägermaterial unerwünscht im Behälter absinken würde. Andererseits können sich Luftbläschen in der halb geschlossenen Form sammeln, so dass das Trägermaterial aufschwimmt und möglicherweise ausgeschwemmt wird.

Ferner ist aus der FR-A-2.185.437 Trägermaterial in Form von Zylindersegmenten bekannt, die mit einer Vielzahl von koaxial gerichteten Lamellenebenen versehen sind.

Ein ähnliches Trägerelement ist aus der EP 0 750 591 B1 bekannt, das eine gegenüber Kollision mit den Oberflächen von anderen Trägerelementen geschützte Oberfläche und Strömungspassagen aufweisen, die so gestaltet sind, dass die geschützte Oberfläche > 200 m²/m³ Trägerelementvolumen ist und einen Querschnittsbereich der Durchgangsöffnungen in der Grenzfläche gegenüber den Umgebungen des Elements von wenigstens 35 % der Grenzfläche gegenüber den Umgebungen eines homogenen Körpers mit den gleichen Abmessungen hat. Die Strömungspassagen sollen eine intensive Wasser- und Luftströmung in das Element aus allen Richtungen erlauben.

Weiter sind Kunststoffpartikelelemente als Trägermaterial aus der EP 0 575 314 B2 bekannt, die in quadratischer oder kreisrunder Rohrform mit eingefügten Stegen als Abschnitte eines extrudierten Kunststoffrohres hergestellt sind.

Die vorgenannten Trägerteilchen erlauben zwar eine hohe Durchströmung und damit gute Belüftung des auf den Teilchen aufwachsenden Biofilms, haben jedoch den Nachteil, dass durch die hohe Durchlässigkeit bei sehr starker Verwirbelung (starker Lufteintrag) hohe Strömungsgeschwindigkeiten durch die Teilchen erreicht werden, womit Biofilm unerwünscht abgetragen werden könnte.

Ausgehend von der DE 30 17 439 A1 ist es Aufgabe der Erfindung ein kalottenförmiges Trägerelement für Kläranlagen anzugeben, das eine von Verwirbelungen im wesentlichen unabhängige Durchströmung im geschützten Innenbereich der Kalottenform erlaubt.

Gelöst wird diese Aufgabe mit einem Trägermaterial gemäß Anspruch 1.

Beim Trägerelement handelt es sich um einen Hohlkörper in Form einer Kalotte. Die Kalotte bzw. Halbkugelschale ist rotationssymmetrisch zur durch den Mittelpunkt der Halbkugelschale führenden Achse, die senkrecht auf der Äquatorialebene (Schnittfläche) steht. In der Halbkugelschale ist im Bereich dieser Rotationssymmetrieachse wenigstens eine Durchtrittsöffnung in der Halbkugelschale vorgesehen. Diese Durchtrittsöffnung erlaubt eine Durchströmung der Halbkugelschale.

Somit wird vermieden, dass ein übermäßiger Biofilmbewuchs die in der Halbkugelschale innenliegenden Lamellen zusetzt. Einerseits wird damit die aktive Oberfläche des Biofilms und damit die Reinigungswirkung stark eingeschränkt. Anderseits würde der sich in dem offenen Hohlkörper zwischen den Lamellen bildende Faulschlamm zu einem Absinken des Trägerelements auf den Boden des Klärbeckens führen. Da dort eine ausreichende Belüftung nicht gegeben ist, können die auf dem Boden abgesunkenen Trägerelemente nicht zur biologischen Reinigung des Abwassers im Klärbecken beitragen.

Ferner verhindert die Durchtrittsöffnung ein Ansammeln von im Klärbecken eingeblasener Luft bzw. Sauerstoff unter der Halbkugelschale, damit das Trägerelement nicht unerwünscht aufschwimmt und ggf. über den Auslauf ausgeschwemmt wird. Durch die Positionierung der Durchtrittsöffnungen nahe der Rotationssymmetrieachse ist gewährleistet, dass die Halbkugelschale im wesentlichen zentral durchströmt wird. Ferner wird dadurch auch die Entlüftung und eine im Wesentlichen horizontale Positionierung mit nach unten orientierter Öffnung der Halbkugelschale des Trägerelementes begünstigt.

Dadurch, dass die Halbkugelschale einen Durchmesser D von 10 mm bis 100 mm, insbesondere 20 mm bis 50 mm, bevorzugt 25 mm bis 40 mm aufweist, wird eine ausreichende Größendimensionierung des Trägerelementes angegeben, um technisch einfache Rückhaltevorrichtungen für die Trägerelemente im Klärbecken vorsehen zu können, die die Teilchen sicher zurückhalten und selbst nicht zum Zusetzen neigen. Andererseits dürfen die Trägerelemente nicht zu groß sein, um eine möglichst zufällige Verteilung der Trägerelemente im Klärbecken im verwirbelten Schwebezustand sicherzustellen.

Wenn die Durchtrittsöffnung einen Durchmesser d von 1/30 D ≤ d ≤ 1/5 D, insbesondere 1 /20 D ≤ d ≤ 1/10 D hat, wird eine im Vergleich zur Größendimensionierung des Trägerelementes sehr dosierte Durchtrittsströmung erreicht. Damit wird vermieden, dass am Teilchen anhaftender Biofilm von der Strömung mitgerissen wird. Außerdem ist eine ausreichende Entlüftungsfunktion, nämlich Durchtritt von in der Halbkugelschale aufgefangenen Luftbläschen gegeben. Es hat sich gezeigt, dass ein Durchtrittsöffnungsdurchmesser von 2 mm bevorzugt ist, da eine solche Öffnung kaum vom Biofilm überwachsen wird und nur eine sehr reduzierte Durchströmung zulässt. In einer bevorzugten Ausgestaltung sind drei Durchtrittsöffnungen radial gleichbeabstandet und in einem Winkel von 120° zueinander nahe der Rotationssymmetrieachse in der Halbkugelschale vorgesehen.

Wenn die innenliegenden Lamellen in zur Rotationssymmetrieachse radialen Ebenen bevorzugt gleichwinklig zueinander angeordnet sind, werden quasi sektorförmig Zwischenräume zwischen den Lamellen aufgespannt, die von der offenen Seite des Hohlkörpers (Äquatorialebene) bis nahe an die Durchtrittsöffnung(en) heranreichen, womit mit der gewünschten dosierten Durchströmung ebenfalls zwischen den Lamellen ein Flüssigkeitsaustausch sowie eine Luftzufuhr im Klärbecken gegeben ist. Entsprechend aktiv bleibt der auf den Lamellen aufwachsende Biofilm, so dass das Trägerelement bei bestimmungsgemäßen Einsatz hohe Reinigungsleistung liefert.

Dadurch, dass die Lamellen an der Halbkugelschale angeformt sind und nahe der Rotationssymmetrieachse enden, um einen lamellenfreien inneren Bereich um die Rotationssymmetrieachse zu bilden, wird vermieden, dass der Zwischenraum zwischen den in Radialebenen zur Rotationssymmetrieachse angeordneten Lamellen zu eng wird und somit vom Biofilm überbrückt werden könnte.

Wenn die Anzahl der Lamellen geradzahlig zwischen 12 und 48 gewählt ist, wobei in Umfangsrichtung jede zweite Lamelle in einem größeren radialen Abstand zur Rotationssymmetrieachse als die jeweilig benachbarte Lamelle endet, werden wiederum zu enge Abstände zwischen aneinander grenzenden Lamellen nahe der Rotationssymmetrieachse vermieden, wobei der äußere radiale Bereich mit doppelter Lamellenzahl besetzt ist, womit die aktive Oberfläche des Trägerelements vergrößert ist. Vorteilhaft betragen der größere radiale Abstand R 0,5 D ≤ R ≤ 0,75 D und der kleinere radiale Abstand r 0,25 D ≤ r≤0,5 D.

Dadurch, dass benachbarte Lamellen zum inneren Bereich untereinander einen Mindestabstand von 1 mm aufweisen, wird vermieden, dass die sich einander nahe kommenden Lamellen mit dem auf ihnen aufwachsenden Biofilm miteinander zusammenwachsen und somit die gewünschte Durchströmung durch den Zwischenraum der Lamellen begrenzen oder verhindern. Es hat sich gezeigt, dass bei gewöhnlichen haustechnischen Kläranlagen der Biofilm maximal eine Stärke von 200 *µ*m hat, so dass noch eine ausreichende Strömungspassage zwischen aneinandergrenzenden Lamellen frei bleibt.

Wenn auf der äußeren Oberfläche der Halbkugelschale Stege, bevorzugt auf Meridianlinien angeformt sind, wird die Oberfläche vor übermäßigem Abrieb des Biofilms geschützt. Bei im verwirbelten Strömungsfeld im Klärbecken aneinander stoßenden Trägerelementen geraten diese nun vermehrt nur an ihren Stegen aneinander, so dass der auf der äußeren Oberfläche aufgewachsene Biofilm besser geschützt ist. Fertigungstechnisch vorteilhaft sind die Lamellen und die Stege zueinander deckungsgleich an der Halbkugelschale angeformt.

Trotz der relativ einfachen Geometrie des Trägerelementes und der relativ großen Dimensionierung hat das Trägerelement eine spezifische Oberfläche je lockerem Schüttvolumen von 400 m²/m³ bis 1.000 m²/m³, bevorzugt 500 m²/m³ bis 750 m²/m³. Es kann somit mit einem relativ kleinen Volumen (Menge) an Trägerelementen eine hohe biologische Reinigungswirkung erzielt werden.

Wenn eine Rohdichte seines Materials, bevorzugt PE, von 0,90 g/cm³ bis 1,05 g/cm³, bevorzugt ca. 0,95 g/cm³, vorgesehen ist, wird der verwirbelte Schwebezustand der mit Biofilm bewachsenen Trägerelemente im Klärbecken optimal erreicht. Der auf dem Trägerelement aufgewachsene Biofilm ist schwerer als Wasser und belastet somit das Trägerelement. Hingegen entlasten im Klärbecken aufsteigende Luftbläschen, die von der Halbkugelschale wenigstens kurzfristig aufgefangen werden, das im Klärbecken befindliche Trägerelement.

Nachfolgend wird ein Ausführungsbeispiel der Erfindung anhand der beiliegenden Figuren detailliert beschrieben.

Darin zeigt:
- Fig. 1: eine Unteransicht eines Trägerelementes,
- Fig. 2: einen Schnitt durch das Trägerelement entlang der in Fig. 3 dargestellten Linie A-A,
- Fig. 3: eine Draufsicht auf das Trägerelement und
- Fig. 4: drei räumliche Ansichten von erfindungsgemäßen Trägerelementen annähernd in Originalgröße.

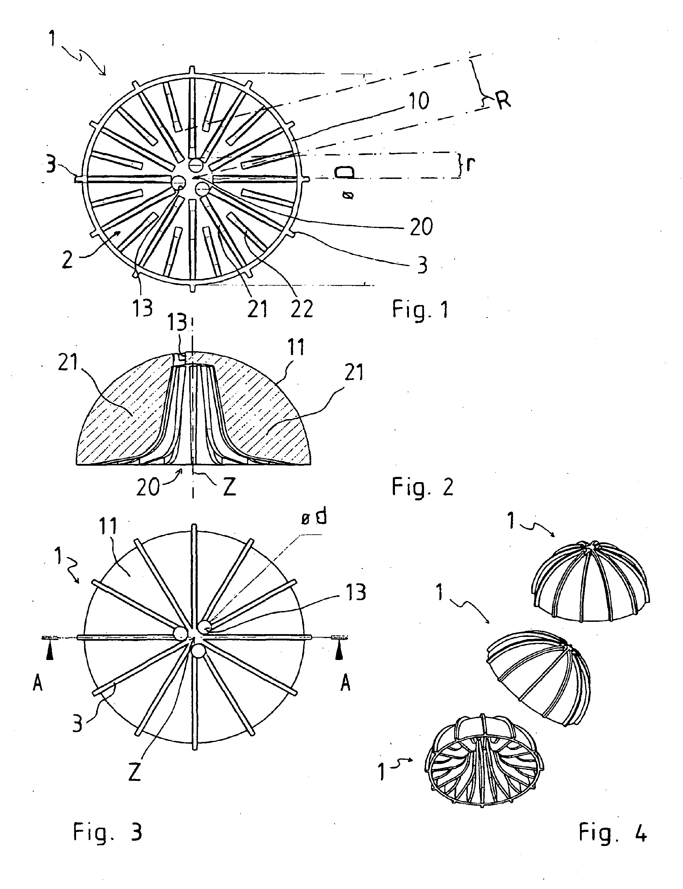

Fig. 1 zeigt ein bevorzugtes Ausführungsbeispiel eines Trägerelements 1 in einer Unteransicht, nämlich auf die offene Schnittfläche einer Halbkugelschale 10, von der in Fig. 1 der freie Rand in Form eines Kreisringes erkennbar ist. Nahe zur Rotationssymmetrieachse Z, also quasi in Pollage auf der Halbkugelschale 10 sind drei Durchtrittsöffnungen 13 zueinander gleichwinklig und radial gleich beabstandet von der Rotationssymmetrieachse Z angeordnet.

In Fig. 2 ist das Trägerelement 1 mit seiner Halbkugelschale 10 in der in Fig. 3 entlang der Linie A-A definierten Schnittlinie dargestellt. In Fig. 3 ist eine Draufsicht auf das Trägerelement 1, also auf die äußere Oberfläche der Halbkugelschale 10 zu sehen. Auf der Halbkugelschale 10 sind auf der äußeren Oberfläche 11 Stege 3 angeformt, die auf Meridianlinien, bevorzugt gleichwinklig zueinander verteilt angeordnet sind.

An der innenseitigen Oberfläche 12 der Halbkugelschale 10 ist eine Lamellenanordnung 2 in durch die Rotationssymmetrieachse Z führenden Radialebenen angeordnet. Ein innerer Bereich 20 um die Rotationssymmetrieachse Z ist vorgesehen, um einen weitestgehend freien Strömungsbereich zu den Durchtrittsöffnungen 13 zu gewährleisten.

Um eine möglichst große Fläche im Hohlraum der Halbkugelschale 10 unterbringen zu können und gleichzeitig einen minimalen Abstand zwischen zwei benachbarten Lamellen der Lamellenanordnung 2 nicht zu unterschreiten, sind erste Lamellen 21, die mit einem kleinen radialen Abstand r nahe an die Rotationssymmetrieachse Z heranreichen und zweite Lamellen 22, die einen größeren Radialabstand R zur Rotationssymmetrieachse Z aufweisen, in wechselseitiger, gleichwinklig beabstandeter Anordnung vorgesehen.

In Fig. 4 sind in einer räumlichen Ansicht drei Trägerelemente 1 in unterschiedlicher räumlicher Orientierung abgebildet. Bevorzugt weist das Trägerelement einen Druchmesser von 30 bis 40 mm auf. Die Durchtrittsöffnungen 13 haben einen Durchmesser d = 2 mm. Die Stege 3 weisen eine Stärke von 0,6 mm und eine Höhe von 1 mm auf und bilden ebenfalls eine Aufwuchsfläche für den Biofilm. Die in der Halbkugelschale 10 aufgenommenen Lamellen 21, 22 weisen eine Stärke von 1 mm auf. Bei einer Herstellung aus Polyethylen (PE) mit einer Rohdichte von 0,95 g/m³ beträgt das Gewicht des Trägerelements ca. 2,7 g. Die spezifische Oberfläche, die bei lockerer Schüttung in einem Volumen von 1 m³ der Trägerelemente bereitgestellt wird, beträgt ca. 500 m² bis 660 m². Entsprechend sind ca. 80.000 bis 100.000 Trägerelemente in einem Kubikmeter loser Schüttung enthalten. Ferner hat das Trägerelement ein Querschnittsöffnungsverhältnis, d. h. das Verhältnis von offenen Flächen zu geschlossenen, von ca. 30 %.

Beim Einsatz des erfindungsgemäßen Trägerelements in biologischen Reinigungsstufen von Kläranlagen hat sich herausgestellt, dass die Trägerelemente ein sehr gutes Schwebeverhalten in der belüfteten Flüssigkeit (Abwasser) zeigen. Die Elemente sinken weder zu Boden, noch schwimmen sie unerwünscht an der Oberfläche auf. Auch beim Anfahren der Anlage, d. h. bei erstmaliger Inbetriebnahme, wird mit den erfindungsgemäßen Trägerelementen das bei Trägerelementen aus dem Stand der Technik bekannte Aufschäumen der Klärflüssigkeit weitestgehend vermieden. Durch die Größe der Trägerelemente wird ein Ausschwemmen aus der Reinigungsstufe durch relativ einfach gestaltete Rückhaltevorrichtungen sicher vermieden. Durch die hohe spezifische Oberfläche wird auch in einem kleinvolumigen Klärbecken eine hohe Klärwirkung erzeugt. Auch nach längerem Betrieb wachsen weder die Zwischenräume zwischen den Lamellen noch die Durchtrittsöffnungen mit Biofilm zu.

### Bezugszeichenliste

- 1: Trägerelement
- 10: Halbkugelschale, Kalotte
- 11: äußere Oberfläche
- 12: innenseitige Oberfläche
- 13: Durchtrittsöffnung

- 2: Lamellenanordnung
- 20: innerer Bereich
- 21: erste Lamelle
- 22: zweite Lamelle

- 3: Steg

- d: Ø Durchtrittsöffnung
- D: Ø Trägerelement
- r: kleiner radialer Abstand
- R: großer radialer Abstand
- Z: Rotationssymmetrieachse

## Patentansprüche

1. Trägerelement zur biologischen Reinigung von Abwasser in einem Klärbecken, bei dem eine Vielzahl der Trägerelemente im Klärbecken ohne Zuführung von Sauerstoff oder unter Zuführung von Luft bzw. Sauerstoff in einem ggf. intermittierend verwirbelten Schwebezustand gehalten werden, wobei das Trägerelement in Form einer Halbkugelschale mit einer Rotationssymmetrieachse ausgebildet ist und im davon aufgespannten offenen Hohlkörper innenliegende Lamellen zur Vergrößerung der vor Abrieb geschützten Biofilmaufwuchsfläche vorgesehen sind, **dadurch gekennzeichnet, dass** nahe zur oder auf der Rotationssymmetrieachse (Z) wenigstens eine Durchtrittsöffnung (13), die einen Durchmesser (d) von 1/30 bis 1/5 des Halbkugelschalendurchmessers (D) hat, in der Halbkugelschale (10) vorgesehen ist.

2. Trägerelement nach Anspruch 1, **dadurch gekennzeichnet, dass** die Durchtrittsöffnung (13) einen Durchmesser (d) von 1/20 bis 1/10 des Halbkugelschalendurchmessers (D) hat.

3. Trägerelement nach Anspruch 1 oder 2, **dadurch gekennzeichnet, dass** die innenliegenden Lamellen (21, 22) in zur Rotationssymmetrieachse (Z) radialen Ebenen bevorzugt gleichwinklig zueinander angeordnet sind, wobei die Lamellen (21, 22) an der Halbkugelschale (10) angeformt sind und nahe der Rotationssymmetrieachse (Z) enden, um einen lamellenfreien inneren Bereich (20) um die Rotationssymmetrieachse (Z) zu bilden.

4. Trägerelement nach Anspruch 3, **dadurch gekennzeichnet, dass** die Anzahl der Lamellen (21, 22) geradzahlig zwischen 12 und 48 gewählt ist, wobei in Umfangsrichtung jede zweite Lamelle in einem größeren radialen Abstand (R) zur Rotationssymmetrieachse (Z) als die jeweilig benachbarte Lamelle endet, die in einem kleineren radialen Abstand (r) zur Rotationssymmetrieachse (Z) endet.

5. Trägerelement nach Anspruch 4, **dadurch gekennzeichnet, dass** der größere radiale Abstand R 0,5 D ≤ R≤ 0,75 D und der kleinere radiale Abstand r 0,25 D ≤ r≤ 0,5 D betragen.

6. Trägerelement nach Anspruch 3, 4 oder 5, **dadurch gekennzeichnet, dass** benachbarte Lamellen zum inneren Bereich untereinander einen Mindestabstand von 1 mm aufweisen.

7. Trägerelement nach einem der vorangehenden Ansprüche, **dadurch gekennzeichnet, dass** auf der äußeren Oberfläche (11) der Halbkugelschale (10) Stege (3), bevorzugt auf Meridianlinien angeformt sind.

8. Trägerelement nach Anspruch 3 und 7, **dadurch gekennzeichnet, dass** die Lamellen (21, 22) und die Stege (3) zueinander deckungsgleich an der Halbkugelschale (10) angeformt sind.

9. Trägerelement nach einem der vorangehenden Ansprüche, **gekennzeichnet durch** eine spezifische Oberfläche je lockerem Schüttvolumen von 400 m²/m³ bis 1.000 m²/m³, bevorzugt 500 m²/m³ bis 750 m²/m³.

10. Trägerelement nach einem der vorangehenden Ansprüche, **gekennzeichnet durch** eine Rohdichte seines Materials, bevorzugt PE, von 0,90 g/cm³ bis 1,05 g/cm³, bevorzugt ca. 0,95 g/cm³.

## Claims

1. A carrier element for the biological cleaning of sewage in a settling tank, with which a plurality of the carrier elements are held in an, optionally intermittently swirled, suspended state in the settling tank without the supplying of oxygen or accompanied by the supplying of air or oxygen, wherein the carrier element is in the form of a hemispherical shell with a rotational symmetry axis and in the open hollow body spanned by the hemispherical shell there are provided internal lamella to increase the biofilm growth surface protected from abrasion, **characterised in that** at least one through opening (13) with a diameter (d) of 1/30 to 1/5 of the hemispherical shell diameter (D) is provided in the hemispherical shell (10), close to or on the rotational symmetry axis (Z).

2. A carrier element according to claim 1, **characterised in that** the through opening (13) has a diameter (d) of 1/20 to 1/10 of the diameter (D) of the hemispherical shell.

3. A carrier element according to claim 1 or 2, **characterised in that** the internal lamella (21, 22) are preferably arranged equiangular to one another in planes radial to the rotational symmetry axis (Z), wherein the lamella (21, 22) are formed on the hemispherical shell (10) and end close to the rotational symmetry axis (Z) in order to form a lamella-free inner region (20) around the rotational symmetry axis (Z).

4. A carrier element according to claim 3, **characterised in that** the number of lamella (21, 22) is selected to be an even number between 12 and 48, wherein in the circumferential direction every other lamella ends at a greater radial distance (R) from the rotational symmetry axis (Z) than the respective neighbouring lamella which ends at a shorter radial distance (r) from the rotational symmetry axis (Z).

5. A carrier element according to claim 4, **characterised in that** the greater radial distance is R 0.5 D ≤ R ≤ 0.75 D and the shorter radial distance is r 0.25 D ≤ r ≤ 0.5 D.

6. A carrier element according to claim 3, 4 or 5, **characterised in that** towards the inner region, adjacent lamella have a minimum distance from one another of 1 mm.

7. A carrier element according to any one of the preceding claims, **characterised in that** bars (3) are formed on the outer surface (11) of the hemispherical shell (10), preferably on meridian lines.

8. A carrier element according to claim 3 and 7, **characterised in that** the lamella (21, 22) and the bars (3) are formed on the hemispherical shell (3) so as to be congruent with one another.

9. A carrier element according to any one of the preceding claims, **characterised by** a specific surface area per loose bulk volume of 400 m²/m³ to 1,000 m²/m³, preferably 500 m²/m³ to 750 m²/m³.

10. A carrier element according to any one of the preceding claims, **characterised by** a bulk density of its material, preferably PE, of 0.90 g/cm³ to 1.05 g/cm³, preferably approximately 0.95 g/cm³.

## Revendications

1. Élément support pour l'épuration biologique des eaux usées dans un bassin de décantation, dans lequel une pluralité d'éléments support sont maintenus en suspension, le cas échéant avec des tourbillonnements par intermittence, dans le bassin de décantation sans admission d'oxygène ou avec admission d'air ou d'oxygène, ledit élément de support étant réalisé sous la forme d'une coque hémisphérique avec un axe de symétrie de révolution, et il est prévu des lamelles, disposées à l'intérieur du corps creux ouvert ainsi formé, et destinées à augmenter la surface de croissance d'un film biologique protégé contre l'abrasion, **caractérisé en ce que**, à proximité de l'axe de symétrie de révolution (Z) ou sur celui-ci, il est prévu dans la coque hémisphérique (10) au moins un orifice de passage (13) ayant un diamètre (d) compris entre 1/30 et 1/5 du diamètre (D) de la coque hémisphérique.

2. Élément support selon la revendication 1, **caractérisé en ce que** l'orifice de passage (13) a un diamètre (d) compris entre 1/20 et 1/10 du diamètre (D) de la coque hémisphérique.

3. Élément support selon la revendication 1 ou 2, **caractérisé en ce que** les lamelles (21, 22) intérieures sont disposées dans des plans radiaux par rapport à l'axe de symétrie de révolution (Z), de préférence selon le même angle les unes par rapport aux autres, lesdites lamelles (21, 22) étant formées sur la coque hémisphérique (10) et se terminant à proximité de l'axe de symétrie de révolution (Z) afin de former autour de l'axe de symétrie de révolution (Z) une zone intérieure (20) sans lamelles.

4. Élément support selon la revendication 3, **caractérisé en ce que** le nombre de lamelles (21, 22) est un nombre pair choisi entre 12 et 48, sachant que dans la direction circonférentielle, une lamelle sur deux se termine à une plus grande distance radiale (R) de l'axe de symétrie de révolution (Z) que la lamelle respectivement adjacente qui se termine à une plus petite distance radiale (r) de l'axe de symétrie de révolution (Z).

5. Élément support selon la revendication 4, **caractérisé en ce que** la plus grande distance radiale (R) mesure 0,5 D ≤ R ≤ 0,75 D et la plus petite distance radiale (r) mesure 0,25 D ≤ r ≤ 0,5 D.

6. Élément support selon la revendication 3, 4 ou 5, **caractérisé en ce que** des lamelles adjacentes présentent entre elles une distance minimale de 1 mm par rapport à la zone intérieure.

7. Élément support selon l'une des revendications précédentes, **caractérisé en ce que** sur la surface extérieure (11) de la coque hémisphérique (10) sont formées des nervures (3), de préférence sur les lignes méridiennes.

8. Élément support selon les revendications 3 et 7, **caractérisé en ce que** les lamelles (21, 22) et les nervures (3) sont formées sur la coque hémisphérique (10) en coïncidant les unes avec les autres.

9. Élément support selon l'une des revendications précédentes, **caractérisé par** une surface spécifique par volume apparent non tassé compris entre 400 m²/m³ et 1 000 m²/m³, de préférence entre 500 m²/m³ et 750 m²/m³.

10. Élément support selon l'une des revendications précédentes, **caractérisé par** une masse volumique apparente de son matériau, de préférence du polyéthylène (PE), comprise entre 0,90 g/cm³ et 1,05 g/cm³, de préférence environ 0,95 g/cm³.
